# EUROPEAN PATENT APPLICATION

(11) **EP 4 425 292 A1**
(43) Date of publication of application: **04.09.2024**
(21) Application number: 23159731.1
(22) Date of filing: 02.03.2023
(51) Int. Cl.: G05D 1/02

(54) **MANAGEMENT SYSTEM AND METHOD FOR AUTONOMOUS VEHICLES**

(71) Applicant: BlueBotics SA, 1025 Saint-Sulpice/VD (CH)
(72) Inventor: Lamon, Pierre, 1066 Epalinges (CH)
(74) Representative: P&TS SA (AG, Ltd.)

(57) **Abstract**

The present invention relates to a system (1) comprising autonomous vehicle being mobile either in a working area (12) or on a first pathway (11) crossing the working area, and a computational unit (U1, U2, U3) adapted to manage the traffic of the autonomous vehicle in the working area. The present invention further relates to a method of managing the traffic of several autonomous vehicles in a working area as well as a dedicated computational unit.

## Description

### Technical domain

The present invention concerns a system designed or adapted to manage the mobility of several autonomous vehicles in an common area, so as to limit the stops and/or the stop durations of the moving autonomous vehicles. The present disclosure also relates to a method of managing the mobility of several of such autonomous vehicle in a common space.

### Related art

An increasing number and diversity of automated guided vehicles (AGV) or more generally unmanned vehicles are, used for more and more applications. In particular, for logistic purposes, in warehouses, more diverse tasks are accomplished by automated guided vehicles, which are no longer limited to the transport of a payload from one point to another one. Variety of tasks such as cleaning, detecting lost objects, archiving, guiding are more and more automated.

Such diversity and increased number of AGV increases the complexity of the environment, wherein keeping the movement of each of the AGV as fluid as possible, becomes a challenging task. The AGV are usually provided with anti-collision systems. However, such anti-collision systems simply stop the AGV, which often need to be restarted by an operator or even reinitiated. Thus, the anti-collision systems does not appear a good solution in a more complex environment.

Some management systems and method have been developed so as to organise the precedence of the AGV at a crossing point. In general, such solutions are well adapted for AGV having similar tasks, usually with linear pathways, wherein one of the AGV simply waits until another one has crossed its path before resuming its pathway.

However, this solution is not applicable for fleets of divers AGV having more divers tasks and/or pathways. Depending on the situation, stopping an AGV to let the passage of another one would result in a decrease of the efficiency due to the cumulative time of waiting of the AGV.

Another problem is the diversity of the management systems of AGV fleets. More and more often, several different fleets of automated vehicles share a common space, wherein each fleet of automated vehicles is dedicated to some specific tasks and managed by a specific control system, having its own maps and rules. In some case, different AGV can be operated by distinct operators independently from one another in such a common space. Such operational diversity also represents a risk of loss of efficiency for lack of integrated management of the traffic to a single control centre.

There is thus room for optimising the management of autonomous vehicles.

### Short disclosure of the invention

An aim of the present invention is the provision of a system and a method that overcomes the shortcomings and limitations of the state of the art. It is in particular an aim of the present invention to provide a management system adapted to manage and/or optimise the traffic of several different autonomous vehicles. It is more particularly an aim of the present disclosure to provide a system adapted to manage autonomous vehicles having different tasks, and/or being of different type, and/or moving along pathways of different typologies.

It is a further aim of the present invention to provide a system adapted to connect different subsystems having each their own automated vehicles so as to optimise the global traffic.

Another aim of the invention is to provide a method adapted to manage and/or optimise the traffic of several different autonomous vehicles. It is more particularly an aim of the present disclosure to provide a method of management of autonomous vehicles having different tasks, and/or being of different type, and/or moving along pathways of different typologies so as to optimise the global efficiency.

It is a further aim of the present invention to provide a method to connect different subsystems of automated vehicles so as to optimise the global traffic.

According to the invention, these aims are attained by the object of the independent claims, and detailed in the dependent claims.

With respect to what is known in the art, the invention provides the advantage of more flexibility and better efficiency of the traffic of autonomous vehicles, in particular in case of divers autonomous vehicles.

### Short description of the drawings

Exemplar embodiments of the invention are disclosed in the description and illustrated by the following drawing:

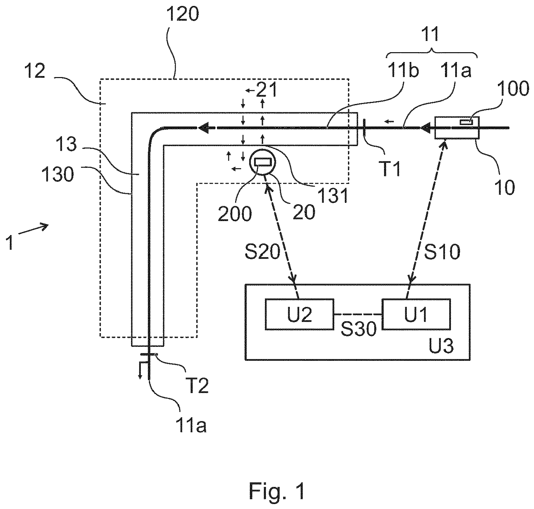

- Figure 1 : Schematic view of the system according to an example of the present invention.

### Examples of embodiments of the present invention

With reference to figure 1, the system 1 of the present disclosure comprises several autonomous vehicles mobile in an area, either an indoor or an outdoor area, being at least partially shared between the autonomous vehicles. The different autonomous vehicles can have different functions such as carrying some payload from one side to another side of the area, cleaning some surfaces of the area, guiding some visitors or detecting some obstacles or lost elements. The type of autonomous vehicles can thus differ from one another, depending on their tasks. The various autonomous vehicles can comprise cleaning robots, autonomous forklifts, carrying robots etc.. The various autonomous vehicles can also have specific displacements, or displacement typology, in the area depending on their tasks. For example, a cleaning robot can remain localised into a reduced area, at least during the time of cleaning, wherein it moves back and forth so as to properly clean the surface. On the contrary, some autonomous vehicles can follow more direct pathways across the area, for example for delivering some payload from a loading point to a delivering point. The path typology can thus vary between straight or curved long paths, short or medium back and forth paths, random paths and any other kind of pathways.

In the present disclosure, an "autonomous vehicle" denotes any unmanned vehicle having abilities to autonomously move in an area and/or autonomously accomplish some tasks. Such "autonomous vehicles" thus denote any autonomous mobile robot, also known as AMR, or any automated guided vehicle, also known as AGV, as well as any related vehicle. This does not exclude that a manual or remote mode can also be possible for driving such autonomous vehicles. A "vehicle" here also denotes such an autonomous vehicle, unless contrary indication. The terms "vehicle", "autonomous vehicle", "automated guided vehicles", "automated vehicles", "autonomous mobile robot" and related terms are thus considered equivalent. An autonomous vehicle preferably denotes a vehicle autonomously moving on a two dimensional space, meaning that it does preferably not include flying robots.

The system 1 according to the present disclosure, a so called management system or traffic management system, comprises at least two autonomous vehicles such as one or several first autonomous vehicle 10 and one or several second autonomous vehicles 20. Although the first 10 and second 20 autonomous vehicles can be similar or identical, or having similar or identical tasks and/or pathways, the present management system 1 provides a great advantage when the first 10 and second 20 autonomous vehicles are of different type and/or operate different tasks, and/or have different path typologies.

More particularly, a first autonomous vehicle 10 can follow a pathway 11 and a second autonomous vehicle 20 can remain in a dedicated area, a so called working area 12, which is at least partially crossed by the first vehicle 10. The displacement of the second autonomous vehicle 20 in the working area 12 can follow a back and forth typology 21 or a random pathway, in a way that it repeatedly crosses the path 11 of the first autonomous vehicle 10. It is noted that a repeated crossing of the pathway 10 is not a necessary condition, since it suffices that the second autonomous vehicle 20 crosses or is assumed to cross once the pathway 11 of the first autonomous vehicle 10. In particular, the path of the first autonomous vehicle 10 can be of a more straight or linear typology, although it is not limited to such a specific kind of displacement.

A working area 12 here denotes any materialized surface or area having an external limit, a so called working limit 120, inside which one or several autonomous vehicles, such as a second autonomous vehicle 20 moves. Such a working area 12 can denote a cleaning area, wherein one or several cleaning robots move along an appropriate path, such as back and forth passages, to efficiently clean the floor. Alternatively, the working area 12 can be a room, such as a storage room, wherein one or several autonomous vehicles like forklifts transfer some payloads from shelves to others or from shelves to docks. Back and forth pathways are also the most representatives in this case. These examples are of course not limitative. The working limit 120 can be of any kind. It can be for example physical walls or physical barriers or physical lines detectable by at least the one or several second autonomous vehicles 20. To this end, suitable sensors and beacons where appropriate can be implemented. Alternatively or in addition, the working limits 120 of the working area 12 are virtual features. They can be for example arranged on a digital map or as digital reference points or lines, readable by the second autonomous vehicle or vehicles 20. Such virtual limits can be directly implemented in the memory and/or driving unit of the corresponding autonomous vehicle. It can be alternatively on a remote server adapted to guide the corresponding autonomous vehicle. Although the external limit **120** should be well recognized from the second autonomous vehicle **20**, it can be advantageously also recognizable by other autonomous vehicles, in particular vehicles moving outside the working zone **12** so as to prevent their intrusion in the working area **12**. The working area **12** can have any two dimensional shape and size as required.

The first autonomous vehicle **10** moves along a pathway which is partly outside and partly inside the working are **12**. It can thus enter and exit the working area **12** of the second autonomous vehicle or vehicles **20**. It moves for example along an external portion **11a**, which corresponds to the part of the pathway **11** external of the working area **12**, and an internal portion **11b**, inside the working area **12**.

The pathway **11** here denotes any kind of pathway, being physically materialised on the floor or surrounding the first autonomous vehicle **10**, or being digitally stored in a memory as a digital or virtual pathway.

The pathway **11** preferably comprises a first reference point **T1**, which can be recognized by the first autonomous vehicle or vehicles **10**. The first reference point **T1** can denote a tag, virtual or real, or a beacon or any related reference point. The first reference point **T1** can be provided on the external portion **11a** of the pathway **11** at close proximity of the working limit **120** of the working area **12.** Alternatively, it can be provided on the working limit **120**. Alternatively, the first reference point **T1** can be a reference point included in the limit materialisation **120**. According to an embodiment, a first reference point **T1** can be any point of the working limit **12**.

The pathway **11** comprises a second reference point **T2**, recognizable by the first autonomous vehicle or vehicles **10**. The second reference point **T2** can denote a tag, virtual or real, or a beacon or any related reference point. The second reference point **T2** can be provided on the external portion **11a** of the pathway **11** at close proximity of the working limit **120** of the working area **12**. Alternatively, it can be provided on the working limit **120**. Alternatively, the second reference point **T2** can be a reference point included in the limit materialisation **120**. According to an embodiment, a second reference point **T2** can be any point of the external limit **12**.

The internal portion **11b** of the pathway **11** is defined by the pathway followed by the corresponding first autonomous vehicle **10** between the first **T1** and the second **T2** reference points. The internal pathway **11b** thus appears to be internal or for its major part inside the working area **12**. The first **T1** and second **T2** reference points can be arranged anywhere on, or close to, the periphery of the working area **12**. They can be for example arranged on opposite sides of the working area **12** so that a first autonomous vehicle can completely cross the working area. Alternatively, the first **T1** and the second **T2** reference points can be arranged on the same side of the working area **12**, which is well adapted when a first autonomous vehicle **10** turns inside the working area **12** and exits from it at a point near or identical to its entrance point. A first reference point **T1** can be the same as a second reference point **T2**, meaning that a first autonomous vehicle 10 enters and exists the working area **12** at the same point. Alternatively, in particular when the internal portion **11b** of the pathway comprises bifurcations, several first **T1** and/or second **T2** reference points can be provided.

In case several first autonomous vehicles **10** are assumed to enter the working area **12**, they can all follow the same pathway **11**, comprising the same external and/or internal portion. In that case, they are all adapted to detect the first **T1** and the second **T2** reference points. Alternatively, several first autonomous vehicles **10** can follow different pathways each one having at least one first **T1** and one second **T2** reference point as above defined and an internal portion.

Part of an internal portion **11b** of a given pathway can be shared with other pathways of first autonomous vehicles.

One or both of the internal **11b** and external **11a** portions of a pathway **11** can be independently from each other predetermined or dynamically determined or temporarily determined. A predetermined pathway or portion of pathway denotes a fixed pathway that the corresponding autonomous vehicle follows at each one of its passage. A dynamically determined pathway or portion of pathway denotes a pathway which can be easily reprogrammed so as to vary from a passage to another one. A temporarily determined pathway or portion of pathway denotes a pathway which is programmed for given time frame or for a given number of passages. In this later case, outside the given number of passages or timeframe, the corresponding pathway or portion of pathway can be no longer valid or be modified.

One or both of the internal **11b** and external **11a** portions of a pathway **11** can be automatically modified on real time upon detection of an obstacle or for any other reason. In this case, in particular for the internal pathway **11b**, the modified pathway remains within predetermined limits. For example, the modified pathway can be defined so as to remain under a shared zone **13**, better described below.

In case several first autonomous vehicles **10** follow a given pathway **11**, they may be individually identified for example when arriving at a first reference point **T1** or at a second reference point **T2** or both. The necessary identity information is thus stored and transmitted for each and/or all the autonomous vehicles.

The system of the present disclosure further comprises one or several shared zones **13**, defining areas wherein both the first **10** and the second **20** autonomous vehicles can move. A shared zone is defined by a limit, which can also be qualified as shared limit **130** or a shared zone limit. The shared limit **130** defines a sub-area, internal the working area **12**, inside which both first **10** and second **20** autonomous vehicles can move alternatively from one another. In other words, only one of the first **10** and the second **20** autonomous vehicles can be present at a time in the shared zone **13**.

A shared zone **13** encompasses the internal portion **11b** of a pathway **11** of a first autonomous vehicle **10**. A given shared zone **13** can encompass internal portion of several different pathways. According to an embodiment, a shared zone **13** is limited to reserve sufficient space along an internal portion **11b** of a pathway **11**, so as to permit a first autonomous vehicle **10** progressing along its corresponding internal portion **11b** without collision with a second autonomous vehicle **20**. This provides the advantage to maximize the remaining space inside the working area **12** where the second autonomous vehicle **20** can still freely move.

According to another embodiment, a shared zone **13** is larger than the space corresponding to the internal portion **11b** of a pathway. For example, a shared zone **13** can correspond to a fraction or a half part of the working zone **12** comprising the internal portion **11b** of a pathway **11**. This is for example particularly suitable in case a first autonomous vehicle **10** manoeuvres inside the working area **12**, which needs some extra space. This is also an advantageous arrangement to secure any potential deviation of the first autonomous vehicle **10** on the internal portion **11b**, for example when avoiding an obstacle. The shape of the shared zone **13** is thus not necessary corresponding to the internal portion **11b**, but at least comprises the internal portion **11b** of a pathway **11**.

A shared zone **13** can be physically materialised, for example by means of physical tags or lines or beacons which are recognizable at least by the second autonomous vehicle or vehicles **20** moving in the corresponding working area **12**. Preferably, the shared limit **130** is a virtual limit, implemented on a digital map, which can be directly implemented in the corresponding second autonomous vehicle **20** or in a remote unit adapted to control the corresponding second autonomous vehicle **20**.

One or both of the working limit **120** and the shared limit **130**, in particular when they are virtual features, can be predetermined, dynamically determined or temporarily determined. For example, a working area **12** can be set valid as long as the task of the corresponding second autonomous vehicle or vehicles **20** is on going. It can then be modified so as to define another working area **12**. The same is applicable to a given shared zone **13**, which can be arranged based on various parameters, including the type and task of the corresponding first autonomous vehicle **10**, the position of the working area **12** on the more general map wherein the corresponding first autonomous vehicle **10** moves, the identity of the corresponding first autonomous vehicle where applicable, potential deviation of the pathway **11**, etc...

According to an embodiment, a given shared zone **13**, can be activated or deactivated. When activated, a shared zone **13** prevents any second autonomous vehicle **20** to enter it. Activation of a shared zone **13** thus allows the secured passage of a first autonomous vehicle **10** along the corresponding internal portion **11b** of the pathway **11**. On the contrary, when inactivated, a shared zone **13** becomes invisible from the second autonomous vehicle or vehicles **20**, which remains free to move across the shared zone **13**. It is understood that a shared zone **13** allows a mutual exclusion of the different autonomous vehicles. In other words, upon activation and deactivation of a shared zone **13**, one or another one of the autonomous vehicles is allowed to enter, while the others are kept outside.

The present system further comprises at least one computational unit **U1**, **U2**, **U3** adapted to manage the traffic of the autonomous vehicles across the working area **12** and communication lines **S10**, **S20** between the corresponding first **10** and second **20** autonomous vehicles.

According to an embodiment, one or several of the first autonomous vehicles **10** are in communication with a first computational units **U1** through at least one communication line **S10**, and one or several of the second autonomous vehicles **20** are in communication with a second computational unit **U2** through at least one second communication line **S20**. The first **U1** and second **U2** computational units are interconnected through one several communication lines **S30**. This can be the case for example when different management systems are implemented in a given zone. The first **U1** and second **U2** computational units can belong to distinct operators. Alternatively or in addition, they can have they own protocols. They are however interconnected so that signals can be transmitted indirectly from a first autonomous vehicle **10** to a second autonomous vehicle **20** and vice versa, through the corresponding computational units.

According to another embodiment, the only one computational unit **U3** is adapted to collect and transmit the signals from and toward the first **10** and second **20** autonomous vehicles.

It is noted that the first autonomous vehicles **10** and the second autonomous vehicles **20** do not directly communicate for the purpose of managing the present traffic across the working area **12**. This does not exclude that first **10** and second **20** autonomous vehicles communicate directly to each other for other purposes.

One or several of the computational units **U1**, **U2**, **U3** can be arranged as a central unit, remote from the autonomous vehicles and preferably fixed at a dedicated place. Alternatively, one or several of the computational units **U1**, **U2**, **U3** or part of them can be embedded in a mobile vehicle, such as a first autonomous vehicle **10** or a second autonomous vehicle **20**.

The first **10** and the second **20** autonomous vehicles, or the corresponding first **U1** and second **U2** computational units can be provided or implemented with different maps. The first autonomous vehicles **10** can be implemented with the corresponding pathway **11**, including the first **T1** and the second **T2** reference points so as to distinguish between an external portion **11a** and internal portion **11b** of the pathway **11**. A first autonomous vehicles **10** can be implemented with the corresponding shared zone **13**. This allows it to modify its pathway while remaining within the limit **130** of the shared zone **13**. A second autonomous vehicle **20** can be implemented with a working area **12**, defined by the corresponding working limit **120**, and the suitably path **21** it should follow inside the working area **12**. It should also be implemented with the shared zone **13**, defined by the shared limit **130** and the corresponding first **T1** and second **T2** reference points. Although the second autonomous vehicle **20** can be implemented with the pathway **11**, or the internal portion **11b** thereof, it is not absolutely needed, since first **T1** and second **T2** reference points are known, as well as an shared zone **13**.

According to an embodiment, the first **T1** and second **T2** reference points of the a pathways **11** are needed only for the corresponding first autonomous vehicle **10**.

The first autonomous vehicle **10** comprises a first control unit **100** adapted to guide the first autonomous vehicle **10** along its corresponding pathway **11**. The first control unit **100** is in particular adapted to detect or receive detection signal of the first **T1** and the second **T2** reference points. Upon detection of the first reference point **T1**, the first control unit **100** is adapted to send a first position signal **ST1** to the corresponding computational unit **U1**, **U2**, **U3**. The first control unit **100** also stops the corresponding first autonomous vehicle **10** at the reference point **T1**, while waiting for a response signal. Upon receiving a positive response signal from the corresponding computational unit **U1**, **U2**, **U3**, the first control unit **100** allows the corresponding first autonomous vehicle driving along the internal portion **11b** of the pathway **11**. At the second reference point **T2**, the first control unit **100** detects or receives a detection signal of the second reference point **T2** and transmits a second position signal **ST2** to the corresponding computational unit **U1**, **U2**, **U3**.

The second autonomous vehicle **20** comprises a second control unit **200** adapted to guide it along its corresponding working pathway **21** inside the working area **12**. It is further adapted to receive and send signals from the corresponding computational unit **U1**, **U2**, **U3**. In particular, the second control unit **200** is adapted to receive the first position signal **ST1** of a first autonomous vehicle **10** from the corresponding computational unit **U1**, **U2**, **U3**. Upon receiving such a first position signal **ST1**, the second control unit **200** is adapted to activate the shared zone **13** and to pilot the corresponding second autonomous vehicle **20** along its working pathway **21** so as to pursue its task while exiting the activated shared zone **13** and/or as long as it remains outside the shared zone **13**. Meanwhile the second control unit **200** is adapted to send acknowledgment signals to the corresponding computational unit **U1**, **U2**, **U3**, when, or if, it is localised outside the shared zone **13**, so as to allow the first autonomous vehicle **10** driving along the corresponding internal portion **11b** of the pathway **11**. The second control unit **200** is furthermore adapted to stop the corresponding second autonomous vehicle **20** on its working pathway **21** when reaching the activated shared limit **130** so as to prevent any intrusion of the corresponding second autonomous vehicle **20** into the shared limit. The second control unit **200** is also adapted to receive second position signals **ST2** from the corresponding computational unit **U1**, **U2**, **U3** and deactivate the shared zone **13** upon receiving such a second position signal **ST2**. The second control unit **200** then allows the corresponding second autonomous vehicle **20** to resume or continue its move along its working pathway **21**.

The computational units **U1**, **U2**, **U3** are adapted to receive signals from the corresponding autonomous vehicles, and transmit the corresponding signals to the dedicated autonomous vehicles so as to avoid the direct communication between the autonomous vehicles regarding the traffic management. In case several different computational units **U1**, **U2**, **U3** are present, the signals are transmitted from one to another through an interconnection line **S30**. The computational units **U1**, **U2**, **U3** denote any electronic device comprising some memory, computing device and communication means as well as suitable software. The computational units **U1**, **U2**, **U3** can be each independently conceived and plugged or added to some existing system. Alternatively, the can denote part of an existing system, which as been programmed accordingly.

According to an embodiment, one or both of the first **100** and second 200 control units are also adapted to send some identity information, so that the corresponding autonomous vehicle is identified. Depending on the identity of a first autonomous vehicle **10**, a specific shared zone **13** may be activated by the corresponding second autonomous vehicle **20**. Depending on the identity of a first autonomous vehicle **10** and/or its internal portion **11b** of pathway, a given shared zone **13**, encompassing the corresponding internal portion **11b** can be activated for one or several specific second autonomous vehicle **20**, present in the working area **12**, and assumed to cross the concerned internal portion **11b**.

When several second autonomous vehicles **20** are present in the working area **12**, they all activate the suitable shared zone **13** upon receiving a first position signal **ST1** from the computational unit **U1**, **U2**, **U3** so that none of them penetrates the corresponding shared zone **13** when a first autonomous vehicle **10** is moving therein. Also, in case several second autonomous vehicles **20** are present in the working area **20**, they need to all send an acknowledgement signal in response to a first position signal S**T1** so that the corresponding first autonomous vehicle **10** can move along the internal portion **11b** of the pathway **11**.

In case several first autonomous vehicles **10** are assumed to enter the working area **12**, each one of them needs to send a first position signal **ST1** at the corresponding first reference point **T1** and a second position signal **ST2** at the corresponding second reference point **T2**. It can happen that different shared zone **13** are activated, depending on which is the first position signal **ST1** or by which first autonomous vehicle **10** it is emitted.

Depending on the sense of move of a first autonomous vehicle, a first position signal **ST1** can be sent either at the first reference point **T1** or the second position point **T2**. A first position signal **ST1** denotes basically an entrance signal. The second position signal **ST2** denotes basically an exit signal. The entrance and exit are here defined according to the corresponding working area **12**.

After sending a first position signal **ST1**, a first autonomous vehicle **10** preferably stops and waits for an acknowledgment from the corresponding computational unit. According to an embodiment, the first autonomous vehicle **10** can decelerate when passing at a preliminary position before reaching the first position **T1**, so as to have time to receive an acknowledgment before reaching the first position T**1**. In that case, the first autonomous vehicle **10** only stops at the first position if it has not received the acknowledgment.

The communication lines **S10**, **S20**, **S30** denote here any mean of communication, including the usual intern communication means like WiFi, Bluetooth, intranet or external communication means like phone infrastructure or internet. Any other communication means including infrared, lidar, internet of thinks infrastructure, can be used where appropriate.

### reference symbols in the figures

- 1: Management system
- 10: First autonomous vehicle
- 20: Second autonomous vehicle
- 11: Pathway of the first autonomous vehicle
- 11a: External portion of the pathway
- 11b: Internal portion of the pathway
- 12: Working area
- 120: Working limit of the working area
- 13: Shared zone
- 130: Shared limit
- T1: First reference point
- T2: Second reference point
- ST1: First position signal
- ST2: Second position signal

## Claims

1. A system (1) comprising :
- one or several first autonomous vehicle (10), each one being mobile on at least one first pathway (11) having an internal portion (11b) internal to at least one working area (12),
- one or several second autonomous vehicle (20) each one being mobile in said at least one working area (12) along a working pathway (21),
- at least one computational unit (U1, U2, U3) adapted to receive and send signals from said one or several first autonomous vehicle (10) by mean of a first communication line (S10) and to receive and send signals from said one or several second autonomous vehicle (20) by means of a second communication line (S20),
wherein said at least one working area (12) comprises at least one activable shared zone (13) encompassing the internal portion (1 1b) of the pathway (11), the system further comprising at least one first reference point (T1) and at least one second reference point (T2) defining said internal portion (11b) and detectable by the at least one first autonomous vehicle (10).

2. System according to claim 1, wherein said at least one working area (12) is defined by at least one working limit (120) and wherein said at least one activable shared zone (13) is defined by at least one shared limit (130), comprised in the at least one working area (12).

3. System according to claim 1, wherein each one of said at least one second autonomous vehicle (10) comprises a first control unit (100) provided with a first map comprising at least the external (11a) and internal (11b) portion of the corresponding pathway (11) and the first (T1) and second (T2) reference points.

4. System according to one of claims 1 to 3, wherein each one of said second autonomous vehicles (20) comprises a second control unit (200), which is provided with a second map comprising at least the corresponding working area (12) and said at least one activable shared zone (13).

5. System according to one of claims 1 to 4, wherein each of said at least one activable shared zone (13) is activated so that said at least one second autonomous vehicle is prevented to enter said activable shared zone (13) and de-activated so that said at least one second autonomous vehicle (20) is allowed to enter said at least one shared zone.

6. System according to one of claims 1 to 5, said at least one computation unit comprises a first computation unit (U1) adapted to exchange signals with one or several of the first autonomous vehicle (10), a second computational unit (U2) adapted to exchange signals with one or several of the second autonomous vehicles (20), and a third communication line (S30) allowing to transfer information between said first (U1) and second (U2) computational units.

7. System according to claim 6, said signals being selected among a first signal (ST1) emitted by said at least one first autonomous vehicle (10) at a first reference point (T1), a second signal (ST2) emitted by said at least one first autonomous vehicle (10) at a second reference point (T2), and an acknowledgment signal emitted by the at least one second autonomous vehicle (20) if outside said activable shared zone (13).

8. A method of managing a fleet of autonomous vehicles, comprising at least one first autonomous vehicle (10) and at least one second autonomous vehicle (20), comprising the steps of :
- Determining the working limits (120) of a working area (12) wherein the at least one second autonomous vehicle (20) moves along a working pathway (21),
- Determining at least one pathway (11) followed by said at least one first autonomous vehicle (10), said pathway having an external portion (11a) external said working area (12) and an internal portion (11b) internal said working area (12),
- Determining at least a first reference point (T1) and at least a second reference point (T2) corresponding to the working limit (120) or external the working limit (120) so as to define said internal portion (11b) of the pathway (11),
- Defining activable shared limits (130) of at least one activable shared zone (13) inside the working area (12), said at least one activable shared zone encompassing the internal portion (11b) of said pathway (11),
so that said at least first autonomous vehicle (10) sends a first position signal (ST1) upon detecting said first reference point (T1), and said at least one second autonomous vehicle (20) activates said activable shared limit (130) of the at least one activable shared zone (13) upon receiving said first position signal (ST1).

9. Method according to claim 8, further comprising the step of maintaining said at least second autonomous vehicle (20) moving along its working pathway (21) upon receiving said first position signal (ST1) so as to exit said shared zone (13) if it is present inside said activated shared zone, and/or until it reaches said activated shared limit (130) so as to remain outside said activated shared zone.

10. Method according to one of claims 8 and 9, wherein said first position signal (ST1) is emitted toward one or several computational unit (U1, U2, U3) and transmitted from said one or several computational units (U1, U2, U3) to said at least one second autonomous vehicle (20).

11. Method according to on one claims 8 to 10, wherein said at least first autonomous vehicle (10) stops at said first reference point (T1) while sending said first position signal (ST1) and wherein said at least one second autonomous vehicle (20) sends an acknowledgment signal if it is outside said activated shared zone (13), so as to allow said at least one first autonomous vehicle (10) moving along said internal portion (11b) of its pathway (11).

12. Method according to claim 11, wherein said acknowledgment signal is send toward one or several computational unit (U1, U2, U3) and transmitted from said one or several computational units (U1, U2, U3) to said at least one first autonomous vehicle (10).

13. Method according to one of claims 11 or 12, wherein said at least one first autonomous vehicle (10) remains at said first reference point (T1) until it receives said acknowledgment signal.

14. Method according to one of claims 8 to 13, wherein said at least one first autonomous vehicle (10) sends a second position signal (ST2) upon detecting said second reference point (T2), and wherein said at least one second autonomous vehicle (20) de-activates the corresponding at least one activable shared zone (13) upon receiving said second position signal (ST2).

15. A computational unit (U1, U2, U3) adapted to receive first position signals (ST1) from and transmit acknowledgment signals to at least one first autonomous vehicle (10) moving along a pathway (11), to receive acknowledgment signals from and transmit first position signals (ST1) to at least one second autonomous vehicle (20) moving within a working area (12), said pathway (11) having and internal portion (11b) internal said working area (12), so as to activate an activable shared zone (13) inside said working area (12) upon receiving said first position signals from said at least one first autonomous vehicle (10) so that said at least one second autonomous vehicle (20) remains outside said activable shared zone (13) while said at least one first autonomous vehicle (10) is allowed to move along said internal portion (11b) of its pathway (11).
